# FASCICULE DE BREVET EUROPEEN

(11) **EP 3 877 211 B1**
(45) Date de publication et mention de la délivrance du brevet: **06.09.2023**
(21) Numéro de dépôt: 19813385.2
(22) Date de dépôt: 25.10.2019
(51) Int. Cl.: B60N 2/30

(54) **SIÈGE ESCAMOTABLE POUR VÉHICULE AUTOMOBILE ET VÉHICULE COMPORTANT UN TEL SIÈGE**
VERSENKBARER SITZ FÜR EIN KRAFTFAHRZEUG UND FAHRZEUG MIT SOLCH EINEM SITZ
RETRACTABLE SEAT FOR A MOTOR VEHICLE AND VEHICLE HAVING SUCH A SEAT

(30) Priorité: 09.11.2018 FR 1871427
(43) Date de publication de la demande: 15.09.2021
(73) Titulaire: PSA Automobiles SA, 78300 Poissy (FR)
(72) Inventeur: DAHLEM, Jean Luc, 92130 ISSY LES MOULINEAUX (FR); GEORGE, Vincent, 28700 BEVILLE LE COMTE (FR)
(86) Numéro de dépôt international: PCT/FR2019/052556
(87) Numéro de publication internationale: WO 2020/094946

(56) Documents cités:
- DE-A1- 4 136 363
- US-A1- 2008 315 654

## Description

La présente invention revendique la priorité de la demande française 1871427 déposée le 09 Novembre 2018.

L'invention se rapporte au domaine des équipements intérieurs des véhicules automobiles. L'invention concerne plus particulièrement un siège de type escamotable et un véhicule automobile comportant un tel siège.

On connait des véhicules automobiles, notamment de type utilitaire, comportant des sièges arrière escamotables. De tels sièges sont articulés de telle manière qu'il est possible de rabattre le dossier, et d'escamoter l'ensemble formé par le dossier replié sur l'assise dans la cavité normalement destinée aux pieds des passagers. Dans la position escamotée, la partie dorsale des dossiers de sièges se trouve dans le prolongement du plancher du coffre, formant ainsi un support pour des charges longues. Afin de rendre la manoeuvre d'escamotage plus facile, il est connu de prévoir un mécanisme de verrouillage désactivable au moyen d'un bouton de commande déporté du siège correspondant pour être accessible depuis le coffre, couplé à un ressort de rappel qui permet de solliciter le siège vers sa position escamotée. Ainsi, lorsqu'un utilisateur déverrouille un siège au moyen du bouton de commande correspondant, le siège est entrainé de sa position normale vers sa position escamotée par le ressort de rappel. Généralement, le ressort de rappel est configuré de manière à initier le mouvement d'escamotage et entraine le siège jusqu'à un point au-delà duquel le siège est entrainé par la gravité. Ainsi, la partie finale du mouvement d'escamotage se réalise sous l'action de la gravité.

Une telle configuration peut cependant présenter un caractère potentiellement dangereux. En effet, la partie terminale du mouvement se faisant sous l'action de la gravité, l'ensemble formé par le dossier et l'assise peut atteindre une vitesse importante, en raison du poids relativement élevé de cet ensemble. Il existe ainsi un risque que le siège atteigne une vitesse finale potentiellement dangereuse pour l'occupant d'un siège voisin, par exemple si celui-ci a positionné l'un de ses pieds sur le trajet du siège en cours d'escamotage. Une telle situation doit bien entendu être évitée.

La demande de brevet DE4136363 A1 divulgue un exemple de siège escamotable de l'état de la technique.

La présente invention a pour but de pallier les inconvénients de l'état de la technique, et plus particulièrement ceux-ci-dessus exposés, en proposant un siège de type escamotable qui ne présente pas de risque pour un occupant du véhicule lors de la manoeuvre d'escamotage.

À cet effet, l'invention concerne un siège de type escamotable pour véhicule automobile, le siège comportant une assise comportant une armature d'assise et un dossier comportant une armature de dossier, le siège étant configuré pour prendre une position normale, compatible avec l'accueil d'un utilisateur, et une position escamotée, dans laquelle le dossier est replié contre l'assise, et dans laquelle l'assise est dans une position avancée et abaissée, au moins une partie terminale du mouvement de passage de la position normale à la position escamotée s'effectuant sous l'action de la gravité, le siège comportant un dispositif amortisseur solidaire de l'armature d'assise d'une part, et de l'armature de dossier d'autre part, afin de freiner la partie terminale de ce mouvement.

Ainsi, en prévoyant un dispositif amortisseur susceptible de freiner le mouvement de passage à la position escamotée du siège, plus particulièrement dans sa partie terminale, on évite que le siège n'atteigne une vitesse importante qui pourrait présenter un caractère dangereux pour les utilisateurs du véhicule.

Conformément à l'invention, l'armature d'assise est reliée à l'armature de dossier par l'intermédiaire de deux bras, chaque bras étant articulé sur un montant respectif de l'armature de dossier.

Dans une réalisation, chaque montant de l'armature de dossier est destiné à être articulé sur une attache arrière solidaire de la caisse d'un véhicule.

Dans une réalisation, l'armature d'assise comporte deux jambes mobiles en rotation par rapport au reste de l'armature d'assise, et destinées à être articulées chacune sur une attache avant de la caisse d'un véhicule.

Conformément à l'invention, le dispositif amortisseur est un vérin comportant une première partie montée à rotation sur l'un des bras de l'armature d'assise et une deuxième partie montée à rotation sur le montant correspondant de l'armature de dossier.

Dans une réalisation, la première partie du vérin est un corps du vérin, la deuxième partie étant une tige du vérin, ou inversement.

Dans une réalisation, le vérin est de type hydropneumatique ou pneumatique.

Dans une réalisation, le siège comporte deux vérins disposés de part et d'autre de l'armature de dossier.

Dans une réalisation, le siège comporte au moins un ressort de rappel configuré pour solliciter le siège de sa position normale vers sa position escamotée.

Dans une réalisation, le siège comporte un carter latéral solidaire du dossier recouvrant le dispositif amortisseur.

L'invention concerne également un véhicule automobile, comportant au moins un siège tel que défini ci-dessus.

La présente invention sera mieux comprise à la lecture de la description détaillée qui suit, faite en référence aux dessins annexés, dans lesquels :
[Fig. 1a] représente un siège conforme à l'invention, le siège étant représenté dans sa position normale et dans une position correspondant au début du mouvement d'escamotage ;
[Fig. 1b] représente le siège de la figure 1a, dans sa position et normale et dans une position correspondant à la fin du mouvement d'escamotage ;
[Fig. 2a] est une vue en perspective de l'armature d'un siège conforme à l'invention, en position normale ;
[Fig. 2b] est une vue de détail de la figure 2a ;
[Fig. 3a] est une vue en perspective de l'armature du siège de la figure 2a, en position escamotée ;
[Fig. 3b] est une vue de détail de la figure 3a.

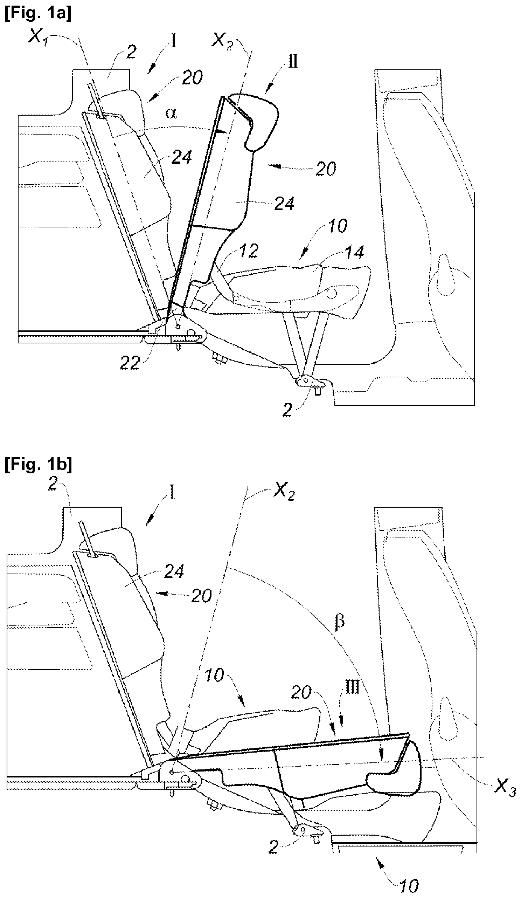

Les figures 1a et 1b représentent un siège 1 arrière escamotable conforme à l'invention.

Le siège 1 comporte une assise 10 et un dossier 20. L'assise 10 comporte notamment une armature d'assise 12 et une garniture d'assise 14, l'armature d'assise 12 étant articulée par rapport à la caisse 2 du véhicule automobile dans lequel le siège 1 est installé. Le dossier 20 comporte notamment une armature de dossier 22 et une garniture de dossier 24.

Sur la figure 1a, le siège 1 est représenté dans sa position normale I (position redressée, permettant l'assise d'un passager), et dans une position intermédiaire II, correspondant au début de la manoeuvre d'escamotage. En position normale, le dossier 20 est solidaire de la caisse 2 du véhicule, par l'intermédiaire d'un mécanisme de verrouillage (non représenté) qui peut être désactivé par l'intermédiaire d'un bouton de commande déporté, disposé par exemple dans le coffre du véhicule. Lorsqu'un utilisateur souhaite escamoter le siège 1, il déverrouille celui-ci par l'intermédiaire du bouton de commande correspondant, puis le siège 1 est entrainé dans son mouvement d'escamotage par un ressort de rappel (non représenté). L'action du ressort de rappel permet d'entrainer le siège au moins jusqu'à la position intermédiaire II visible sur la figure 1a, position dans laquelle l'action de la gravité prend le relais de l'action du ressort de rappel, et entraine le siège 1 vers sa position d'escamotage. L'angle α entre la position normale I et la position intermédiaire II, qui correspond à l'angle entre les axes X₁ et X₂, est compris entre 20 et 45 degrés, et par exemple supérieur ou égal à 35 degrés.

Sur la figure 1b, on a représenté le siège 1 à la fois dans sa position normale I et dans sa position escamotée III. Comme visible sur la figure 1b, la position escamotée du siège 1 est telle que l'assise 10 se trouve logée dans la cavité prévue pour les pieds des occupants du siège, et le dossier 20 se trouve dans une position dans laquelle la partie dorsale de celui-ci est sensiblement alignée avec le plancher du coffre du véhicule. L'angle β entre la position intermédiaire II représentée sur la figure 1a et la position escamotée III, qui correspond à l'angle entre les axes X₁ et X₃, est compris entre 30 et 50 degrés, et par exemple égal à 40 degrés. L'angle β représente ainsi la plage sur laquelle le mouvement d'escamotage du siège 1 est, conformément à l'invention, freiné.

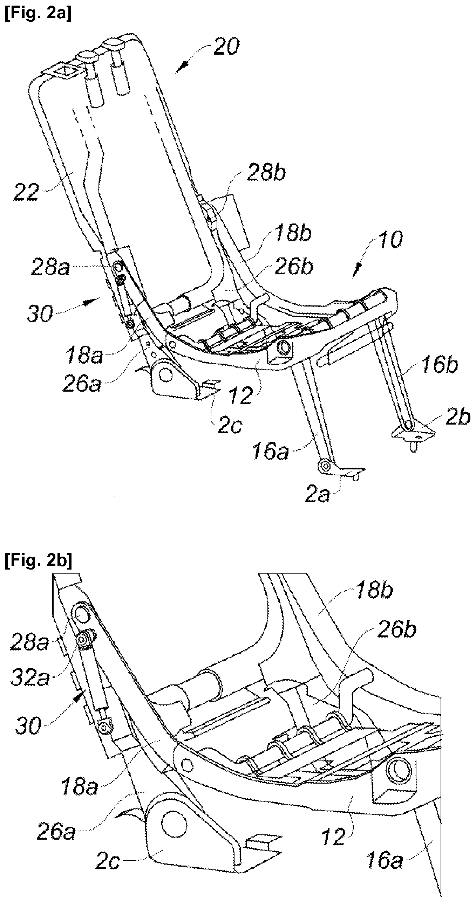

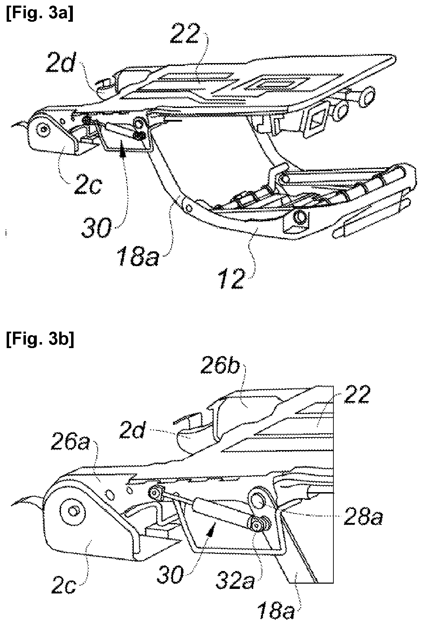

Les figures 2a et 2b montrent le siège 1 dépourvu des garnitures d'assise et de dossier, dans sa position normale (position I de la figure 1a). Les figures 3a et 3b montrent le siège 1, également dépourvu des garnitures, dans sa position escamotée (position III de la figure 1b).

Afin de permettre le mouvement d'escamotage du siège 1, l'armature d'assise 12 est reliée à la caisse 2 du véhicule par l'intermédiaire de deux jambes 16a, 16b. Les jambes 16a, 16b sont articulées, d'une part, sur deux attaches avant 2a, 2b solidaires de la caisse 2 du véhicule, et, d'autre part, sur l'armature d'assise 12. L'armature 12 est par ailleurs reliée à l'armature de dossier 22 par l'intermédiaire de deux bras 18a, 18b, respectivement articulés chacun sur l'un de deux montants 26a, 26b latéraux de l'armature de dossier 22, au niveau d'un pivot 28a, 28b. Les montants 26a, 26b sont articulés sur deux attaches arrière 2c, 2d solidaires de la caisse du véhicule. Comme visible sur les figures 2a et 3a, cette configuration permet au siège 1 de passer de position normale, prévue pour l'assise d'un passager (figure 2a), à la position escamotée (figure 3a), dans laquelle le dossier 20 est basculé vers l'avant et replié contre l'assise 10, et dans laquelle l'assise est dans une position basse et avancée, occupant la cavité destinée aux pieds des passagers.

Conformément à l'invention, le siège 1 comporte un dispositif amortisseur 30 reliant l'armature d'assise 12 à l'armature de dossier 22, afin de freiner la partie terminale du mouvement d'escamotage. Conformément à l'invention, le dispositif amortisseur 30 est un vérin, par exemple de type hydropneumatique ou pneumatique. Le vérin 30 comporte un corps 32, dans l'exemple monté à rotation sur l'un des bras 18a de l'armature d'assise 12, et une tige 34, dans l'exemple montée à rotation sur le montant 26a correspondant de l'armature de dossier 22. Bien entendu, on pourra prévoir le montage inversé, le corps 32 du vérin étant monté à rotation sur l'armature de dossier 22, et la tige de vérin 34 étant montée à rotation sur l'armature d'assise 12.

Comme visible notamment sur les figures 2b et 3b, le vérin 30 est dans une configuration rétractée lorsque le siège 1 est en position normale, et dans une configuration étendue lorsque le siège 1 est en position escamotée. En effet, le vérin 30 est positionné de telle manière que le passage du siège de sa position normale à sa position escamotée a pour effet d'augmenter la distance entre les points de fixation respectifs du corps 32 du vérin (sur le bras 18a de l'armature d'assise 12) et de la tige 34 du vérin (sur le montant 26a de l'armature de dossier 22), sollicitant alors le vérin 30 en extension qui, en retour, génère une force d'amortissement freinant le mouvement du siège. En effet, en s'opposant au mouvement de rotation de l'armature d'assise 12 par rapport à l'armature de dossier 22 lié au repli du dossier 20 sur l'assise 10, le vérin 30 s'oppose au mouvement de passage de la position normale à la position escamotée du siège 1.

Avantageusement, le vérin 30 est de type hydropneumatique. Un vérin de ce type présente une taille réduite pour une puissance donnée.

Avantageusement, comme visible notamment sur la figure 2b, le point d'ancrage 32a du vérin 30 sur le bras 18a de l'armature d'assise 12 est situé à proximité du pivot 28a. La distance entre le point d'ancrage 32a et le pivot 28a est notamment comprise entre 10 et 40 millimètres, ou comprise entre 20 et 30 millimètres, et par exemple égale à 25 millimètres. Cette configuration permet d'obtenir un débattement angulaire du vérin réduit lors du passage à la position escamotée (figure 3b), ce qui réduit son encombrement et facilite son intégration puisque le vérin 30 est positionné sous un carter solidaire du siège.

Le siège 1 représenté sur les figures annexées comporte un dispositif amortisseur 30 mais l'on pourra prévoir deux dispositifs amortisseurs, un de chaque côté du siège.

## Revendications

1. Siège (1) de type escamotable pour véhicule automobile, le siège (1) comportant une assise (10) comportant une armature d'assise (12) et un dossier (20) comportant une armature de dossier (22), le siège étant configuré pour prendre une position normale, compatible avec l'accueil d'un utilisateur, et une position escamotée, dans laquelle le dossier (20) est replié contre l'assise (10), et dans laquelle l'assise (10) est dans une position avancée et abaissée, au moins une partie terminale du mouvement de passage de la position normale à la position escamotée s'effectuant sous l'action de la gravité, le siège comportant un dispositif amortisseur (30) solidaire de l'armature d'assise (12) d'une part, et de l'armature de dossier (22) d'autre part, afin de freiner la partie terminale de ce mouvement, **caractérisé en ce que** l'armature d'assise (12) est reliée à l'armature de dossier (22) par l'intermédiaire de deux bras (18a, 18b), chaque bras (18a, 18b) étant articulé sur un montant (26a, 26b) respectif de l'armature de dossier (22) et **en ce que** le dispositif amortisseur est un vérin (30) comportant une première partie (32) montée à rotation sur l'un des bras (18a, 18b) de l'armature d'assise (12) et une deuxième partie (34) montée à rotation sur le montant (26a, 26b) correspondant de l'armature de dossier (22).

2. Siège (1) selon la revendication précédente, dans lequel chaque montant (26a, 26b) de l'armature de dossier (22) est destiné à être articulé sur une attache arrière (2c, 2d) solidaire de la caisse d'un véhicule.

3. Siège (1) selon l'une des revendications précédentes, dans lequel l'armature d'assise (12) comporte deux jambes (16a, 16b), mobiles en rotation par rapport au reste de l'armature d'assise (12), et destinées à être articulées chacune sur une attache avant (2a, 2b) de la caisse d'un véhicule.

4. Siège (1) selon la revendication 1, dans laquelle la première partie du vérin est un corps (32) du vérin (30), la deuxième partie étant une tige du vérin (34), ou inversement.

5. Siège (1) selon l'une des revendications 1 et 4, dans lequel le vérin (30) est de type hydropneumatique ou pneumatique.

6. Siège (1) selon l'une des revendications 1 à 5, comportant deux vérins (30), disposés de part et d'autre de l'armature de dossier (22).

7. Siège (1) selon l'une des revendications précédentes, comportant au moins un ressort de rappel configuré pour solliciter le siège de sa position normale vers sa position escamotée.

8. Véhicule automobile, comportant au moins un siège (1) conforme à l'une des revendications précédentes.

## Patentansprüche

1. Versenkbarer Sitz (1) für ein Kraftfahrzeug, wobei der Sitz (1) ein Sitzteil (10) mit einem Sitzrahmen (12) und eine Rückenlehne (20) mit einem Rückenlehnenrahmen (22) aufweist, wobei der Sitz so konfiguriert ist, dass er eine normale, mit der Aufnahme eines Benutzers kompatible Position einnimmt, und eine eingezogene Position, in der die Rückenlehne (20) gegen das Sitzteil (10) gefaltet ist, und in der das Sitzteil (10) sich in einer vorgerückten und abgesenkten Position befindet, wobei zumindest ein Endabschnitt der Vorwärtsbewegung aus der Position herausbewegt wird Normal zu der eingezogenen Position, die unter der Wirkung der Schwerkraft erfolgt, wobei der Sitz eine Dämpfungsvorrichtung (30) aufweist, die einerseits mit dem Sitzrahmen (12) und andererseits mit dem Rückenlehnenrahmen (22) verbunden ist, um den Endabschnitt dieser Bewegung zu bremsen, **dadurch gekennzeichnet, dass** der Sitzrahmen (12) über zwei Arme (18a, 18b), jeder Arm (18a, 18b), mit dem Rückenlehnenrahmen (22) verbunden ist an einem jeweiligen Träger (26a, 26b) des Rückenlehnengestells (22) angelenkt ist und dass die Dämpfungsvorrichtung ein Zylinder (30) ist, der einen ersten Teil (32), der drehbar an einem der Arme (18a, 18b) des Sitzgestells (12) angebracht ist, und einen zweiten Teil (34) aufweist, der drehbar an dem entsprechenden Träger (26a, 26b) des Rückenlehnengestells (22) angebracht ist.

2. Sitz (1) nach dem vorhergehenden Anspruch, bei dem jeder Ständer (26a, 26b) des Rückenlehnengestells (22) dazu bestimmt ist, an einer hinteren Befestigungseinrichtung (2c, 2d) angelenkt zu werden, die mit dem Fahrzeugaufbau verbunden ist.

3. Sitz (1) nach einem der vorhergehenden Ansprüche, bei dem der Sitzanker (12) zwei Beine (16a, 16b) aufweist, die in Bezug auf den Rest des Sitzankers (12) drehbar sind und dazu bestimmt sind, jeweils an einer vorderen Halterung (2a, 2b) des Fahrzeugaufbaus angelenkt zu werden.

4. Sitz (1) nach Anspruch 1, wobei der erste Teil des Zylinders ein Körper (32) des Zylinders (30) ist, wobei der zweite Teil eine Stange des Zylinders (34) ist, oder umgekehrt.

5. Sitz (1) nach einem der Ansprüche 1 und 4, bei dem der Zylinder (30) hydropneumatisch oder pneumatisch ist.

6. Sitz (1) nach einem der Ansprüche 1 bis 5, mit zwei Zylindern (30), die beiderseits des Rückenlehnenarms (22) angeordnet sind.

7. Sitz (1) nach einem der vorhergehenden Ansprüche, der mindestens eine Rückstellfeder aufweist, die so konfiguriert ist, dass sie den Sitz aus seiner normalen Position in seine eingezogene Position vorspannt.

8. Kraftfahrzeug mit mindestens einem Sitz (1) nach einem der vorhergehenden Ansprüche.

## Claims

1. A retractable seat (1) for a motor vehicle, the seat (1) comprising a seat part (10) comprising a seat part (12) and a back part (20) comprising a back part (22), the seat being configured to take a normal position, compatible with the reception of a user, and a retracted position, in which the back part (20) is folded against the seat part (10), and in which the seat part (10) is in a forward and lowered position, at least a terminal part of the movement from the normal position to the retracted position The seat is provided with a damping device (30) which is integral with the seat-back frame (12) on the one hand, and with the seat-back frame (22) on the other hand, in order to brake the end part of this movement, **characterized in that** the seat-back frame (12) is connected to the seat-back frame (22) by means of two arms (18a, 18b), each arm (18a, 18b) being articulated on a upright (26a, 26b) (b) respectively of the backrest frame (22) and **in that** the damping device is a jack (30) comprising a first part (32) mounted to rotate on one of the arms (18a, 18b) of the seat-frame (12) and a second part (34) mounted to rotate on the corresponding upright (26a, 26b) of the backrest frame (22).

2. Seat (1) according to the preceding claim, in which each upright (26a, 26b) of the backrest frame (22) is intended to be articulated on a rear attachment (2c, 2d) integral with the body of a vehicle.

3. Seat (1) according to one of the preceding claims, in which the seat frame (12) comprises two legs (16a, 16b) which are movable in rotation relative to the rest of the seat frame (12) and which are each intended to be hinged to a front attachment (2a, 2b) of the body of a vehicle.

4. Seat (1) according to Claim 1, in which the first part of the jack is a body (32) of the jack (30), the second part being a rod of the jack (34), or vice versa.

5. Seat (1) according to one of Claims 1 and 4, in which the jack (30) is of the hydropneumatic or pneumatic type.

6. Seat (1) according to one of Claims 1 to 5, comprising two jacks (30) disposed on either side of the backrest frame (22).

7. Seat (1) according to one of the preceding claims, comprising at least one return spring configured to urge the seat from its normal position to its retracted position.

8. Motor vehicle, comprising at least one seat (1) according to one of the preceding claims.
